# EUROPÄISCHE PATENTSCHRIFT

(11) **EP 2 759 283 B1**
(45) Veröffentlichungstag und Bekanntmachung des Hinweises auf die Patenterteilung: **05.08.2015**
(21) Anmeldenummer: 13000394.0
(22) Anmeldetag: 28.01.2013
(51) Int. Cl.: A61G 3/00

(54) **Kraftfahrzeug, insbesondere Rettungsfahrzeug**
Motor vehicle, in particular a rescue vehicle
Véhicule automobile, en particulier véhicule de secours

(43) Veröffentlichungstag der Anmeldung: 30.07.2014
(73) Patentinhaber: BINZ Ambulance- und Umwelttechnik GmbH, 98693 Ilmenau (DE)
(72) Erfinder: Busam, Carsten, 77654 Offenburg (DE)
(74) Vertreter: Huwer, Andreas

(56) Entgegenhaltungen:
- DE-U1- 29 519 956
- US-A- 5 236 390

## Beschreibung

Die Erfindung betrifft ein Kraftfahrzeug, insbesondere ein Rettungsfahrzeug, mit einem Passagierraum und mindestens einem benachbart dazu angeordneten Ablagefach zur Aufnahme von Ausrüstungsgegenständen des Kraftfahrzeugs, wobei der Passagierraum durch mindestens eine Wand begrenzt ist, die eine Türöffnung aufweist, an der mindestens eine innere Drehtür angeordnet ist, wobei das Ablagefach zwischen der inneren Drehtür und einer äußeren Drehtür vorgesehen ist, und wobei die innere Drehtür und die äußere Drehtür jeweils relativ zu der Wand und relativ zueinander zwischen einer Offen- und einer Schließstellung verschwenkbar sind.

Ein derartiges Kraftfahrzeug ist aus US 5 236 390 bekannt. Es weist ein Fahrgestell mit einem Kastenaufbau auf, in dem ein Passagierraum angeordnet ist. In dem Passagierraum sind eine Liege für einen Patienten und medizinische Einrichtungen zur Behandlung des Patienten vorgesehen. Neben dem Passagierraum ist in dem Kastenaufbau ein Eingangsbereich angeordnet, in dem ein Ablagefach zur Aufnahme von Ausrüstungsgegenständen vorgesehen ist. Zwischen dem Passagierraum und dem Eingangsbereich ist eine innere Wand angeordnet, die eine innere Türöffnung aufweist, die mit einer zum Passagierraum hin öffnenden inneren Drehtür verschließbar ist. Der Eingangsbereich ist zwischen der inneren Wand und einer äußeren Wand des Kastenaufbaus angeordnet. In der äußeren Wand ist eine äußere Türöffnung vorgesehen, die mit einer äußeren Drehtür verschließbar ist, welche zur Fahrzeugaußenseite hin öffnet. Da der Eingangsbereich über die äußere Drehtür von der Fahrzeugaußenseite her zugänglich ist, können die Ausrüstungsgegenstände durch die äußere Türöffnung hindurch aus dem Ablagefach entnommen bzw. in dieses eingebracht werden. Dabei kann die innere Drehtür geschlossen bleiben, so dass im Winter keine Kälte und im Sommer keine Wärme aus dem Freien in den klimatisierten Passagierraum gelangen kann. Das Kraftfahrzeug hat jedoch den Nachteil, dass der Eingangsbereich relativ viel Platz benötigt, wodurch die für den Passagierraum zur Verfügung stehende Fläche entsprechend reduziert ist. Ungünstig ist außerdem, dass die innere Drehtür zum Passagierraum hin öffnet, so dass dort der Platz vor der Drehtür nicht richtig genutzt werden kann. Schließlich ist die Handhabung der Drehtüren noch recht umständlich, weil zum Eintreten in den Passagierraum und zum Verlassen des Passagierraums die beiden Drehtüren nacheinander betätigt werden müssen.

Es besteht deshalb die Aufgabe, ein Kraftfahrzeug der eingangs genannten Art zu schaffen, in dem die Ausrüstungsgegenstände platzsparend untergebracht werden können und bei dem sowohl der Passagierraum als auch die Ausrüstungsgegenstände leicht zugänglich sind.

Diese Aufgabe wird bei einem Kraftfahrzeug der eingangs genannten Art dadurch gelöst, dass die innere Drehtür und die äußere Drehtür um dieselbe gedachte Schwenkachse verschwenkbar mit der Wand verbunden sind.

In vorteilhafter Weise ist es dadurch möglich, zum Entnehmen von Ausrüstungsgegenständen aus dem Ablagefach und/oder zum Einlagern von Ausrüstungsgegenständen in das Ablagefach nur die äußere Drehtür zu betätigen. Dabei kann die innere Drehtür geschlossen bleiben, damit die Klimatisierung des Passagierraums nicht gestört und kein Schmutz und/oder Schlagregen aus dem Freien in den Passagierraum gelangen kann. Bei Bedarf kann die äußere Drehtür auch bei offener innerer Drehtür betätigt werden, so dass dann sowohl der Passagierraum als auch die Ausrüstungsgegenstände zugänglich sind.

Wenn nur ein Zugang zum Passagierraum gewünscht wird, können die innere Drehtür und die äußere Drehtür gleichzeitig betätigt werden. Dabei verschwenkt das Ablagefach zusammen mit den Drehtüren relativ zur Wand um die Schwenkachse. Da die beiden Drehtüren um dieselbe Schwenkachse verschwenkbar ist, kann die aus den beiden Drehtüren bestehende Anordnung wie eine einzige Drehtür verschwenkt werden. Dies ermöglicht einen komfortablen Zugang zum Passagierraum außerdem können die inneren und äußeren Drehtüren unabhängig voneinander um die Schwenkachse verschwenkt werden.

Bei einer bevorzugten Ausgestaltung der Erfindung ist die innere Drehtür schalenförmig ausgestaltet und weist an ihrer dem Passagierraum abgewandten Außenseite eine Aufnahmevertiefung zur Aufnahme der Ausrüstungsgegenstände auf und/oder die äußere Drehtür ist schalenförmig ausgestaltet ist und weist an ihrer dem Passagierraum zugewandten Innenseite eine Aufnahmevertiefung zur Aufnahme der Ausrüstungsgegenstände auf Die innere bzw. äußere Drehtür ist dadurch kostengünstig herstellbar. Außerdem ermöglicht sie beim Einlagern und Entnehmen der Ausrüstungsgegenstände eine einfache und bequeme Handhabung.

Zweckmäßig ist, wenn in der Aufnahmevertiefung und/oder an der dieser zugewandten Seite einer Drehtür mindestens eine Halterung zum Befestigen der Ausrüstungsgegenstände angeordnet ist. Dadurch können auf engem Raum möglichst viele Ausrüstungsgegenstände in dem Ablagefach geordnet untergebracht werden. Durch die Halterung kann außerdem vermieden werden, dass sich die Ausrüstungsgegenstände während der Fahrt in dem Ablagefach unkontrolliert hin- und herbewegen.

In der Aufnahmevertiefung kann mindestens eine Trennwand angeordnet sein, welche die Aufnahmevertiefung in Kammern unterteilt. Dadurch können kleinere Ausrüstungsgegenstände besser in dem Ablagefach untergebracht werden.

Bei einer vorteilhaften Ausführungsform der Erfindung sind die Drehtüren derart verschwenkbar mit der Wand verbunden, dass bei in Schließstellung befindlicher äußerer Drehtür die dem Passagierraum abgewandte Außenseite der äußeren Drehtür in gerader Verlängerung zur Außenfläche der Wand fluchtet. Das Kraftfahrzeug ermöglicht dadurch ein optisch schönes Design.

Bevorzugt hat das Kraftfahrzeug für die innere Drehtür eine in eine Offen- und eine Verriegelungsstellung bringbare erste Verriegelungsvorrichtung, die an der inneren Drehtür ein von der Schwenkachse beabstandetes erstes Verriegelungselement und an der Wand, der Decke und/oder dem Boden des Passagierraums wenigstens ein mit dem ersten Verriegelungselement formschlüssig verbindbares erstes Widerlager aufweist. Dabei können das erste Verriegelungselement und/oder das erste Widerlager mit einem an der Außenseite der äußeren Drehtür und/oder der Innenseite der inneren Drehtür angeordneten ersten Türgriff in Antriebsverbindung stehen.

Vorteilhaft ist, wenn das Kraftfahrzeug für die äußere Drehtür eine in eine Offen- und eine Verriegelungsstellung bringbare zweite Verriegelungsvorrichtung hat, die an der äußeren Drehtür ein von der Schwenkachse beabstandetes erstes Verriegelungselement und an der inneren Drehtür wenigstens ein mit dem zweiten Verriegelungselement formschlüssig verbindbares zweites Widerlager aufweist. Dabei können das zweite Verriegelungselement und/oder das zweite Widerlager mit einem an der Außenseite der äußeren Drehtür angeordneten zweiten Türgriff in Antriebsverbindung stehen.

Bei einer zweckmäßigen Ausführungsform der Erfindung bildet die die Türöffnung aufweisende Wand die Rückwand des Passagierraums, wobei das Kraftfahrzeug einen seitlich über den Seitenrand der Rückwand nach außen überstehenden Außenrückspiegel aufweist, und wobei die Schwenkachse der Drehtüren derart vom Seitenrand der Rückwand beabstandet ist und die Abmessungen der Drehtüren derart an die Lage der Schwenkachse und den Überstand des Außenrückspiegels angepasst sind, dass die Drehtüren in ihrer 180° Offenstellung nicht weiter seitlich nach außen über den Seitenrand der Rückwand überstehen als der Außenrückspiegel. Dadurch wird bei offener Fahrzeugtür eine Einengung des Verkehrsraumes auf einer zu dem Kraftfahrzeug benachbarten Fahrspur vermieden.

Bei einer bevorzugten Ausgestaltung der Erfindung sind an der Türöffnung zwei innere Drehtüren und zwei äußere Drehtüren angeordnet, wobei zwischen einer linken inneren Drehtür und einer linken äußeren Drehtür ein linkes Ablagefach und zwischen einer rechten inneren Drehtür und einer rechten äußeren Drehtür ein rechtes Ablagefach gebildet ist, wobei die linke innere Drehtür und die linke äußere Drehtür um eine am linken Rand der Türöffnung angeordnete gedachte linke Schwenkachse und die rechte innere Drehtür sowie die rechte äußere Drehtür um eine am rechten Rand der Türöffnung angeordnete gedachte rechte Schwenkachse verschwenkbar mit der Wand verbunden sind. Die aus den inneren und den äußeren Drehtüren gebildeten Fahrzeugtüren können also auch eine Doppelflügeltür bilden. Dies ermöglicht einen besseren Zugang zum Passagierraum. Bei Bedarf können die Flügel der Doppelflügeltür auch einzeln betätigt werden.

Nachfolgend ist ein Ausführungsbeispiel der Erfindung anhand der Zeichnung näher erläutert. Es zeigt:
- Fig. 1: eine perspektivische Ansicht eines Rettungsfahrzeugs, das einen Kofferaufbau aufweist, der einen Passagierraum umgrenzt, der durch eine hintere Fahrzeugtüre zugänglich ist, wobei die Fahrzeugtüre geschlossen ist,
- Fig. 2: eine Darstellung ähnlich Fig. 1, wobei jedoch zwei äußere Drehtüren der hinteren Fahrzeugtüre geöffnet sind,
- Fig. 3: eine Darstellung ähnlich Fig. 2, wobei jedoch am rechten Türflügel der hinteren Fahrzeugtüre die äußere und die innere Drehtüre geöffnet sind,
- Fig. 4: eine Darstellung ähnlich Fig. 2, wobei jedoch die hintere Fahrzeugtüre vollständig geöffnet ist,
- Fig. 5: eine Ansicht auf die Rückseite des Kofferaufbaus, bei der alle vier Drehtüren um unterschiedliche Winkel gegenüber ihrer Schließstellung verschwenkt sind,
- Fig. 6: eine Ansicht auf die Schwenklager des linken Türflügels der hinteren Fahrzeugtüre,
- Fig. 7: eine Ansicht auf die Schwenklager des rechten Türflügels der hinteren Fahrzeugtüre,
- Fig. 8: eine vergrößerte Ansicht des linken Türflügels der hinteren Fahrzeugtüre, wobei die innere und äußere Drehtüre um unterschiedliche Winkel gegenüber ihrer Schließstellung verschwenkt sind,
- Fig. 9: eine vergrößerte Ansicht des rechten Türflügels der hinteren Fahrzeugtüre, wobei die innere und äußere Drehtüre um unterschiedliche Winkel aus der Schließstellung geöffnet sind,
- Fig. 10: eine vergrößerte Ansicht des linken Türflügel der hinteren Fahrzeugtüre, wobei die innere und äußere Drehtüre des linken Türflügels um denselben Winkel geöffnet sind, und
- Fig. 11: eine Aufsicht auf die hintere Fahrzeugtüre, wobei beim rechten Türflügel die innere und äußere Drehtüre um denselben Winkel geöffnet und der linke Türflügel vollständig geschlossen ist.

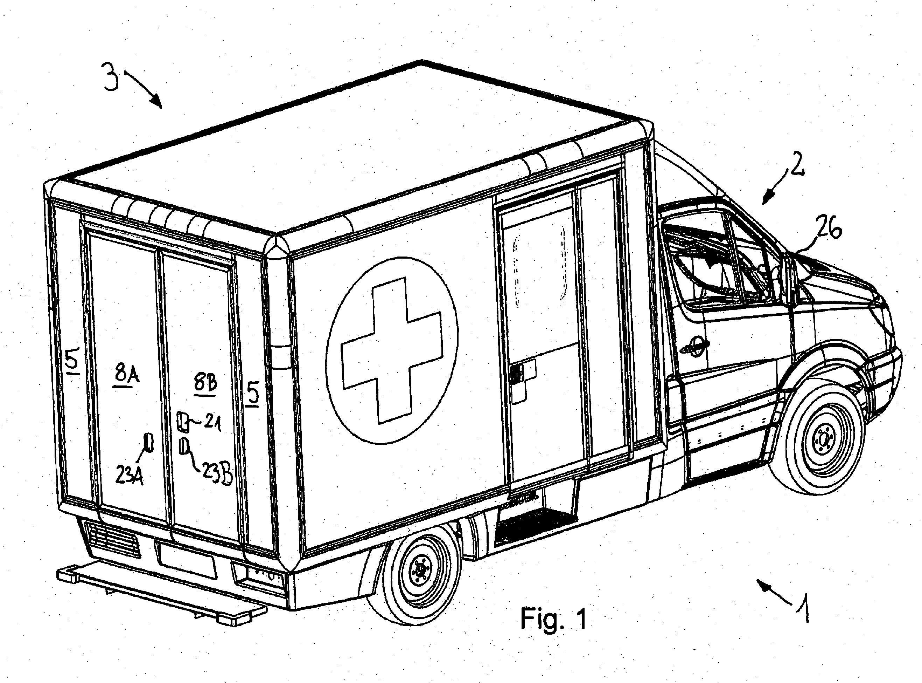

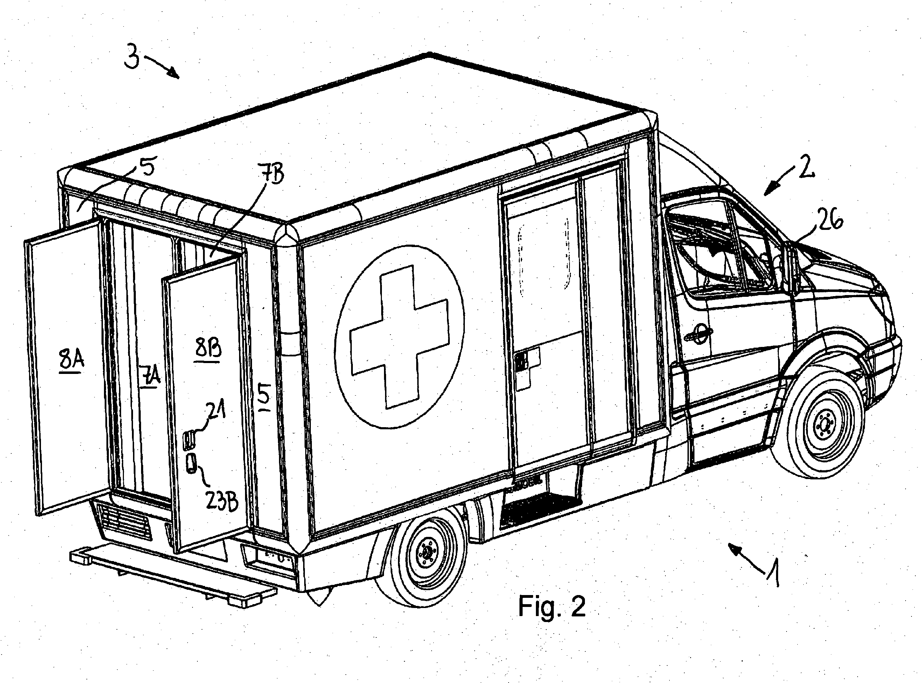

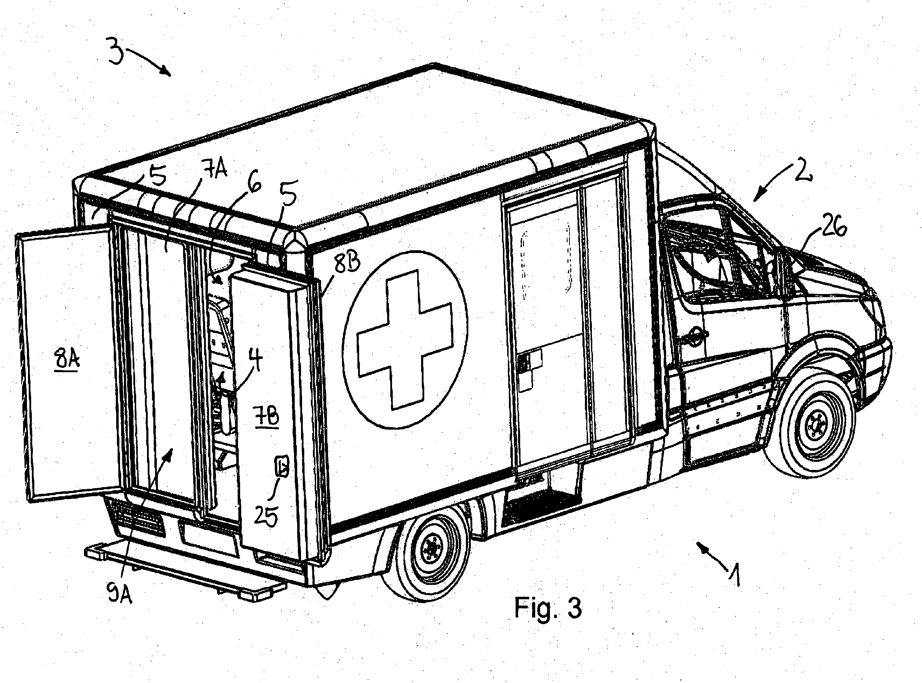

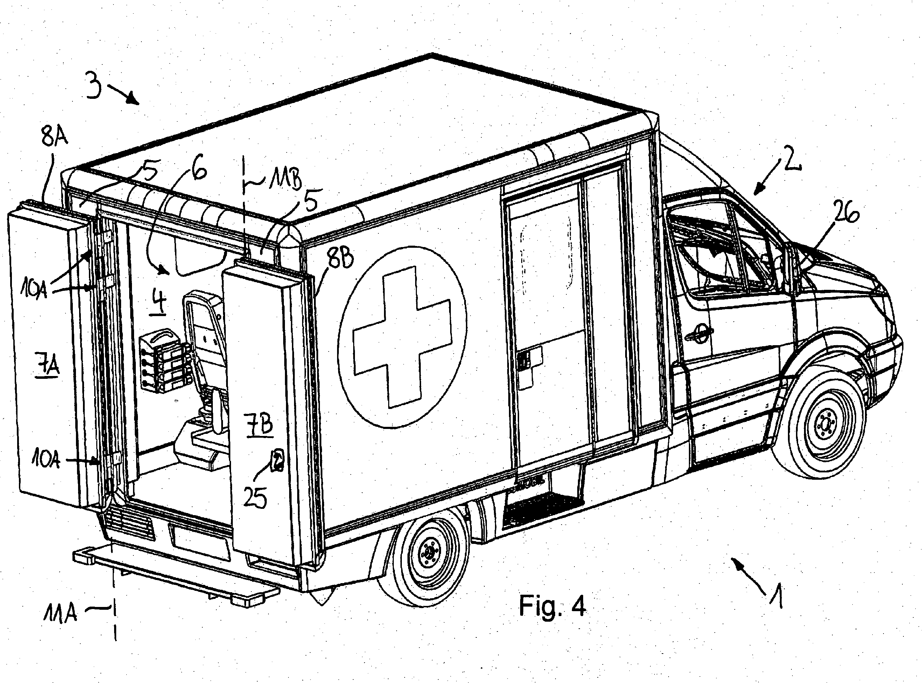

Ein in Fig. 1 bis 4 im Ganzen mit 1 bezeichnetes, als Krankenwagen ausgestaltetes Kraftfahrzeug weist ein Fahrwerk auf, auf dem eine Fahrerkabine 2 und ein Kastenaufbau 3 angeordnet ist, der einen Passagierraum 4 umgrenzt, in dem eine in der Zeichnung nicht näher dargestellte Patientenliege und medizinische Einrichtungen zur Versorgung des Patententen angeordnet sind. Der Kastenaufbau 2 hat an seiner der Fahrerkabine 2 abgewandten Rückseite eine Wand 5, welche den Passagierraum 4 zum Heck des Kraftfahrzeugs 1 hin begrenzt.

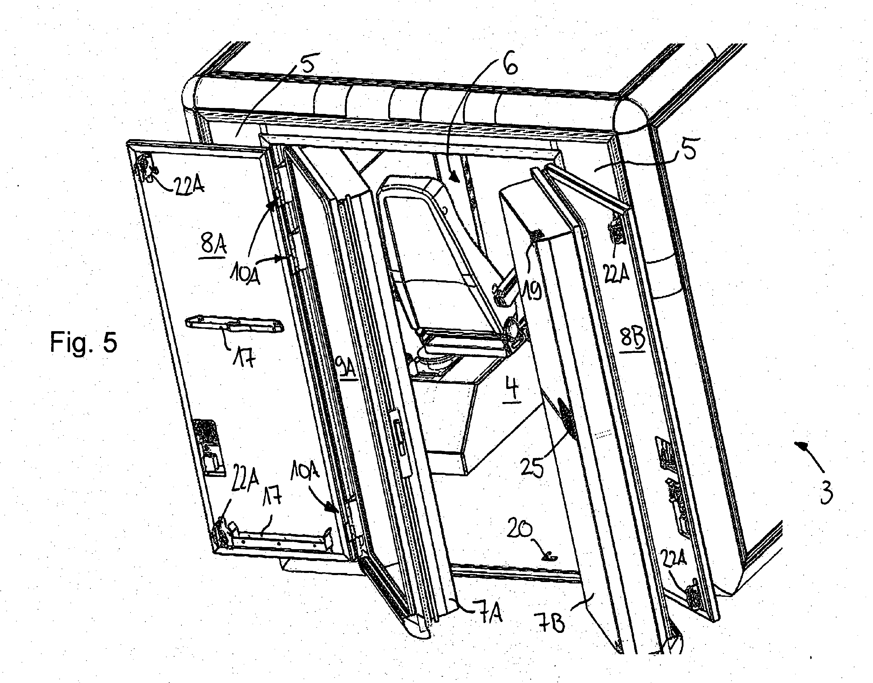

Die Wand 5 weist eine Türöffnung 6 auf, die mittels einer Doppelflügeltür verschließbar ist. Die Doppelflügeltür hat einen linken Türflügel (Fig. 5), der eine linke innere Drehtür 7A und eine linke äußere Drehtüre 8A aufweist. Beim Öffnen der Drehtüren 8A, 8B verschwenken diese vom Passagierraum 4 weg nach außen. Die linke innere Drehtür 7A weist eine Türschale auf, die an ihrer dem Passagierraum 4 abgewandten Außenseite eine linke Aufnahmevertiefung aufweist, die ein linkes Ablagefach 9A zur Aufnahme von in der Zeichnung nicht näher dargestellten Ausrüstungsgegenständen des Kraftfahrzeugs 1 bildet. Die Ausrüstungsgegenstände können beispielsweise eine Schaufeltrage, eine Vakuummatratze und einen Tragestuhl umfassen.

Die Doppelflügeltür hat ferner einen rechten Türflügel, der eine rechte innere Drehtür 7B und eine rechte äußere Drehtüre 8B aufweist, die beim Öffnen vom Passagierraum 4 weg nach außen verschwenken. Die rechte innere Drehtür 7B weist eine Türschale auf, die an ihrer dem Passagierraum 4 abgewandten Außenseite eine rechte Aufnahmevertiefung aufweist, die ein rechtes Ablagefach 9B zur Aufnahme der Ausrüstungsgegenstände bildet.

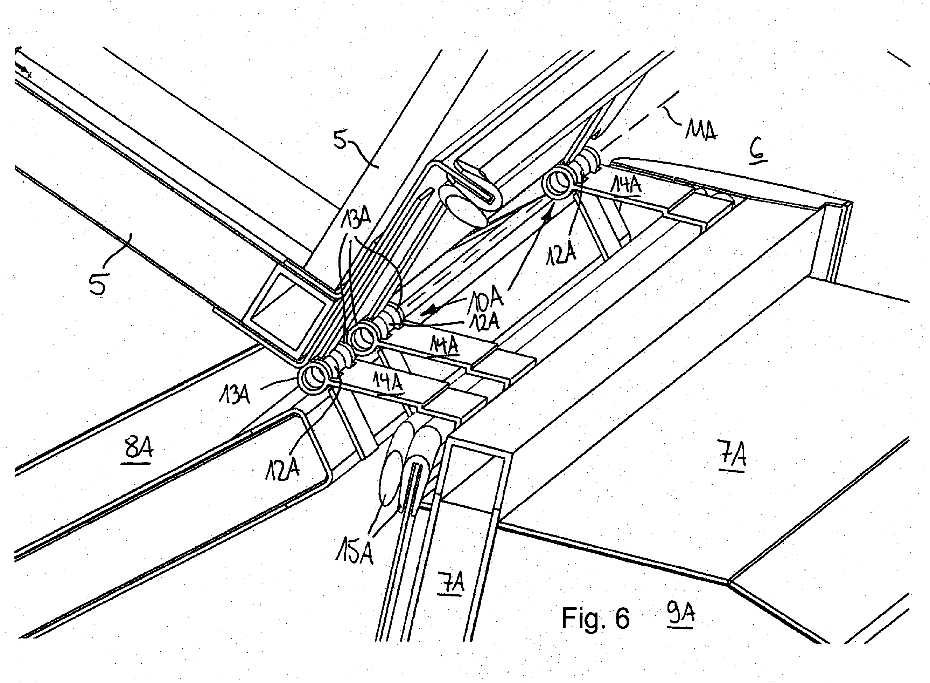

Wie in Fig. 6 erkennbar ist, sind die linke innere Drehtür 7A und die linke äußere Drehtür 8A mit Hilfe von linken Schwenklagern 10A um eine gedachte vertikale linke Schwenkachse 11 A zwischen einer Offen- und einer Schließstellung verschwenkbar mit der Wand 5 verbunden. Jedes linke Schwenklager 10A hat jeweils einen mit der Wand 5 verbundenen Lagerzapfen, auf dem erste linke Schwenklagerteile 12A und zweite linke Schwenklagerteile 13A unabhängig voneinander verschwenkbar sind. Die ersten linken Schwenklagerteile 12A sind jeweils mit der linken äußeren Drehtür 8A verbunden. Die zweiten linken Schwenklagerteile 13A sind jeweils mit einem Ende eines linken Tragarms 14A verbunden, der mit seinem anderen Ende an der linken inneren Drehtür 7A befestigt ist.

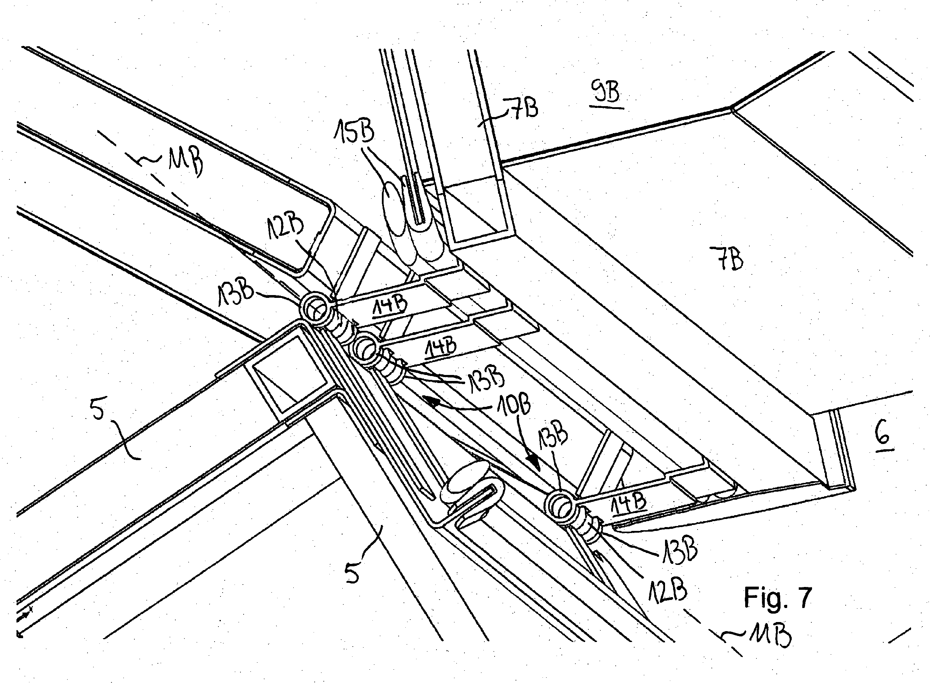

Wie in Fig. 7 erkennbar ist, sind die rechte innere Drehtür 7B und die rechte äußere Drehtür 8B mit Hilfe von rechten Schwenklagern 10B um eine gedachte vertikale rechte Schwenkachse 11B zwischen einer Offen- und einer Schließstellung verschwenkbar mit der Wand 5 verbunden. Jedes rechte Schwenklager 10B hat jeweils einen mit der Wand 5 verbundenen Lagerzapfen, auf dem erste rechte Schwenklagerteile 12B und zweite rechte Schwenklagerteile 13B unabhängig voneinander verschwenkbar sind. Die ersten rechten Schwenklagerteile 12B sind jeweils mit der rechten äußeren Drehtür 8B verbunden. Die zweiten rechten Schwenklagerteile 13B sind jeweils mit einem Ende eines rechten Tragarms 14B verbunden, der mit seinem anderen Ende an der rechte inneren Drehtür 7B befestigt ist.

Wie in Fig. 6 erkennbar ist, weist die linke innere Drehtür 7A an einem Randbereich einen Flansch auf, an dem eine linke Dichtung 15A angeordnet ist, welche das linke Ablagefach 9A umgrenzt. Wenn die linke innere Drehtür 7A und die linke äußere Drehtür 8A geschlossen oder um denselben Winkel gegenüber ihrer Schließstellung verschwenkt sind, ist der Flansch derart der linken äußeren Drehtür 8A zugewandt, dass die linke Dichtung 15A am Rand der linken äußeren Drehtür 8A zur Anlage kommt. Dadurch ist das zwischen der linken inneren Drehtür 7A und der linken äußeren Drehtür 8A vorgesehene linke Ablagefach 9A gegen das Eindringen von Staub, Regen- und Spritzwasser abgedichtet.

In Fig. 7 ist erkennbar, dass in entsprechender Weise die rechte innere Drehtür 7B an einem Randbereich einen Flansch aufweist, an dem eine rechte Dichtung 15B angeordnet ist, welche das rechte Ablagefach 9B umgrenzt. Wenn die rechte innere Drehtür 7B und die rechte äußere Drehtür 8B geschlossen oder um denselben Winkel gegenüber ihrer Schließstellung verschwenkt sind, ist der Flansch derart der rechten äußeren Drehtür 8B zugewandt, dass die rechte Dichtung 15B am Rand der rechten äußeren Drehtür 8B zur Anlage kommt. Dadurch ist das zwischen der rechten inneren Drehtür 7B und der rechten äußeren Drehtür 8B vorgesehene rechte Ablagefach 9B gegen das Eindringen von Staub, Regen- und Spritzwasser abgedichtet.

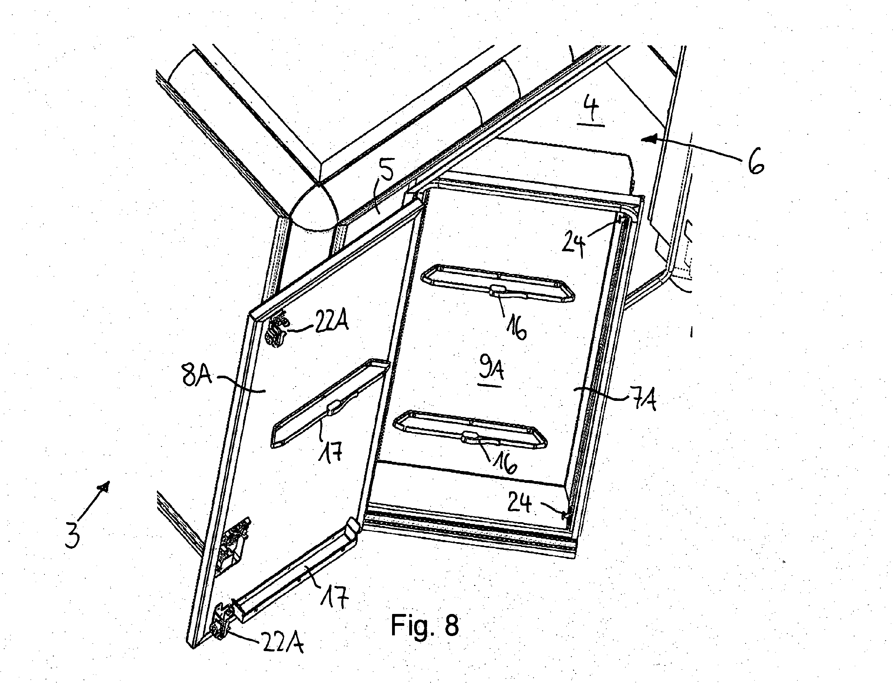

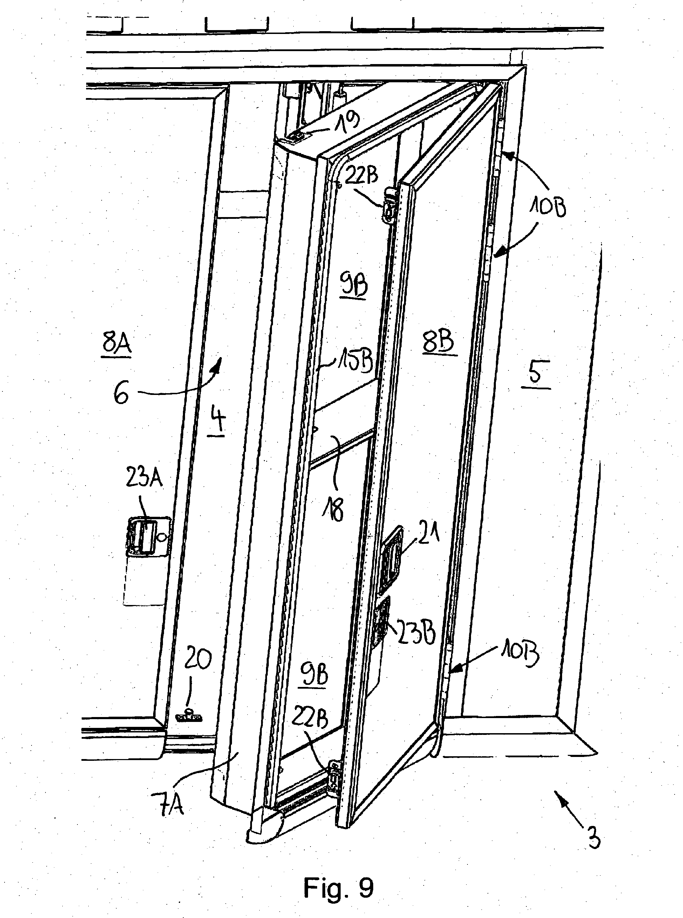

Wie in Fig. 8 erkennbar ist, ist in der Aufnahmevertiefung der linken inneren Drehtür 7A ist eine erste Halterung 16 zum Befestigen der Ausrüstungsgegenstände angeordnet und an der in Schließstellung dem Passagierraum 4 zugewandten Innenseite des rechten äußeren Drehtür 8A ist eine zweite Halterung 17 zum Befestigen von Ausrüstungsgegenständen vorgesehen. Im rechten Ablagefach 9B ist an der rechten inneren Drehtür eine vertikale Trennwand 18 angeordnet, welche die Aufnahmevertiefung in eine obere und eine untere Kammer unterteilt (Fig. 9).

Für die rechte innere Drehtür 7B ist eine in eine Offen- und eine Verriegelungsstellung bringbare erste Verriegelungsvorrichtung vorgesehen, die an der rechten inneren Drehtür 7B zwei von der rechten Schwenkachse 11 B beabstandete erste Verriegelungselemente 19 und an der Decke sowie am Boden des Passagierraums jeweils ein mit dem betreffenden ersten Verriegelungselement 19 formschlüssig verbindbares erstes Widerlager 20 aufweist. Die ersten Verriegelungselemente 19 sind relativ zu der rechten inneren Drehtür 7B bewegbar und stehen über in der Zeichnung nicht näher dargestellte Bowdenzüge mit einem an der Außenseite der rechten äußeren Drehtür 8B angebrachten ersten rechten Türgriff 21 und einem an der Innenseite der rechten inneren Drehtür 7B angeordneten inneren Türgriff 25 in Antriebsverbindung.

Für die rechte äußere Drehtür 8B ist eine in eine Offen- und eine Verriegelungsstellung bringbare zweite rechte Verriegelungsvorrichtung vorgesehen, die an der rechten äußeren Drehtür 8B zwei von der rechten Schwenkachse 11B beabstandete zweite rechte Verriegelungselemente 22B und an der rechten inneren Drehtür 7B für jedes zweite rechte Verriegelungselement 22B jeweils ein damit zusammenwirkendes zweites Widerlager aufweist. Die zweiten rechten Verriegelungselemente 22B sind relativ zu der rechten äußeren Drehtür 8B bewegbar und stehen über in der Zeichnung nicht näher dargestellte Bowdenzüge mit einem an der Außenseite der rechten äußeren Drehtür 8B angebrachten zweiten rechtem Türgriff 23B in Antriebsverbindung. In Schließstellung übergreift die rechte innere Drehtür 7B mit einem Randbereich die linke innere Drehtüre 7A. Dadurch können mit der ersten Verriegelungsvorrichtung beide innere Drehtüren 7A, 7B gleichzeitig verriegelt bzw. entriegelt werden.

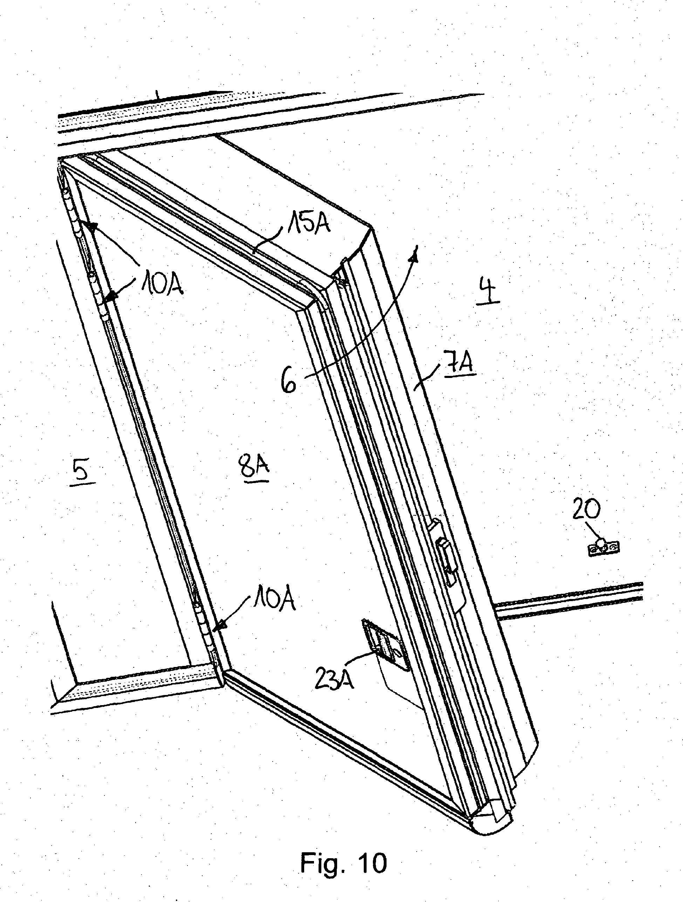

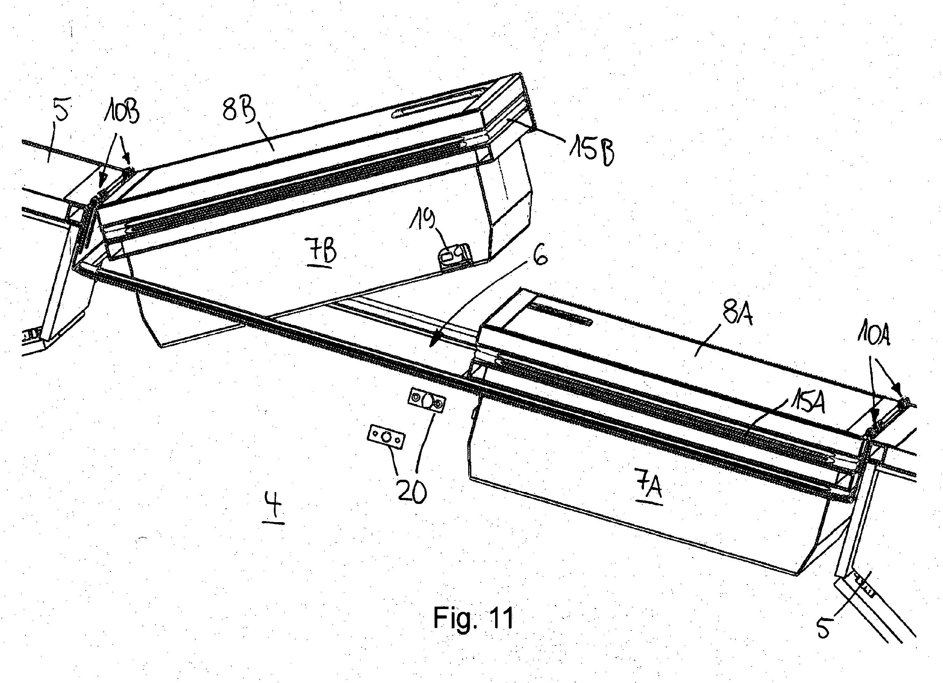

Für die linke äußere Drehtür 8A ist eine in eine Offen- und eine Verriegelungsstellung bringbare zweite linke Verriegelungsvorrichtung vorgesehen, die an der linken äußeren Drehtür 8A zwei von der linken Schwenkachse 11 A beabstandete zweite linke Verriegelungselemente 22A und an der linken inneren Drehtür 7A für jedes zweite linke Verriegelungselement 22A jeweils ein damit zusammenwirkendes zweites linkes Widerlager 24 (Fig. 8) aufweist. Die zweiten linken Verriegelungselemente 22A sind relativ zu der linken äußeren Drehtür 8A bewegbar und stehen über in der Zeichnung nicht näher dargestellte Bowdenzüge mit einem an der Außenseite der linken äußeren Drehtür 8A angebrachten linken Türgriff 23B (Fig. 9 bis 11) in Antriebsverbindung.

Erwähnt werden soll noch, dass das Kraftfahrzeug 1 an seiner linken Fahrzeugseite einen seitlich über den linken Seitenrand der Wand 5 nach außen überstehenden linken Außenrückspiegel und an seiner rechten Fahrzeugseite einen seitlich über den rechten Seitenrand der Wand 5 nach außen überstehenden rechten Außenrückspiegel 25 aufweist.

Die linke Schwenkachse 11A ist derart gegenüber dem linken Seitenrand der Wand 5 nach rechts versetzt und die horizontalen Abmessungen der linken Drehtüren 7A, 8A sind derart an diesen Versatz und den Überstand des linken Außenrückspiegels angepasst, dass die linken Drehtüren 7A, 8A in ihrer 180° Offenstellung nicht weiter nach links außen über den linken Seitenrand der Wand 5 überstehen als der linke Außenrückspiegel.

In entsprechender Weise ist die rechte Schwenkachse 11 B derart gegenüber dem rechten Seitenrand der Wand 5 nach links versetzt und die horizontalen Abmessungen der rechten Drehtüren 7B, 8B sind derart an diesen Versatz und den Überstand des Außenrückspiegels 25 angepasst, dass die rechten Drehtüren 7B, 8B in ihrer 180° Offenstellung nicht weiter nach rechts außen über den rechten Seitenrand der Wand 5 überstehen als der rechte Außenrückspiegel 25.

## Patentansprüche

1. Kraftfahrzeug (1), insbesondere Rettungsfahrzeug, mit einem Passagierraum (4) und mindestens einem benachbart dazu angeordneten Ablagefach (9A, 9B) zur Aufnahme von Ausrüstungsgegenständen des Kraftfahrzeugs, wobei der Passagierraum (4) durch mindestens eine Wand (5) begrenzt ist, die eine Türöffnung (6) aufweist, an der mindestens eine innere Drehtür (7A, 7B) angeordnet ist, wobei das Ablagefach (9A, 9B) zwischen der inneren Drehtür (7A, 7B) und einer äußeren Drehtür (8A, 8B) vorgesehen ist, und wobei die innere Drehtür (7A, 7B) und die äußere Drehtüre (8A, 8B) jeweils relativ zu der Wand (5) und relativ zueinander zwischen einer Offen- und einer Schließstellung verschwenkbar sind, **dadurch gekennzeichnet, dass** die innere Drehtür (7A, 7B) und die äußere Drehtür (8A, 8B) um dieselbe gedachte Schwenkachse (11A, 11B) verschwenkbar mit der Wand (5) verbunden sind.

2. Kraftfahrzeug (1) nach Anspruch 1, **dadurch gekennzeichnet, dass** die innere Drehtür (7A, 7B) schalenförmig ausgestaltet ist und an ihrer dem Passagierraum (4) abgewandten Außenseite eine Aufnahmevertiefung zur Aufnahme der Ausrüstungsgegenstände aufweist und/oder dass die äußere Drehtür (8A, 8B) schalenförmig ausgestaltet ist und an ihrer dem Passagierraum (4) zugewandten Innenseite eine Aufnahmevertiefung zur Aufnahme der Ausrüstungsgegenstände aufweist.

3. Kraftfahrzeug (1) nach Anspruch 2, **dadurch gekennzeichnet, dass** in der Aufnahmevertiefung und/oder an der dieser zugewandten Seite einer Drehtür (7A, 7B, 8A, 8B) mindestens eine Halterung (16, 17) zum Befestigen der Ausrüstungsgegenstände angeordnet ist.

4. Kraftfahrzeug (1) nach Anspruch 2 oder 3, **dadurch gekennzeichnet, dass** in der Aufnahmevertiefung mindestens eine Trennwand (18) angeordnet ist, welche die Aufnahmevertiefung in Kammern unterteilt.

5. Kraftfahrzeug (1) nach einem der Ansprüche 1 bis 4, **dadurch gekennzeichnet, dass** die Drehtüren (7A, 7B, 8A, 8B) derart verschwenkbar mit der Wand (5) verbunden sind, dass bei in Schließstellung befindlicher äußerer Drehtür (8A, 8B) die dem Passagierraum (4) abgewandte Außenseite der äußeren Drehtür (8A, 8B) in gerader Verlängerung zur Außenfläche der Wand (5) fluchtet.

6. Kraftfahrzeug (1) nach einem der Ansprüche 1 bis 5, **dadurch gekennzeichnet, dass** das Kraftfahrzeug (1) für die innere Drehtür (7A, 7B) eine in eine Offen- und eine Verriegelungsstellung bringbare erste Verriegelungsvorrichtung aufweist, die an der inneren Drehtür (7A, 7B) ein von der Schwenkachse (11A, 11B) beabstandetes erstes Verriegelungselement (19) und an der Wand (5), der Decke und/oder dem Boden des Passagierraums (4) wenigstens ein mit dem ersten Verriegelungselement (19) formschlüssig verbindbares erstes Widerlager (20) aufweist.

7. Kraftfahrzeug (1) nach einem der Ansprüche 1 bis 6, **dadurch gekennzeichnet, dass** das Kraftfahrzeug (1) für die äußere Drehtür (8A, 8B) eine in eine Offen- und eine Verriegelungsstellung bringbare zweite Verriegelungsvorrichtung aufweist, die an der äußeren Drehtür (8A, 8B) ein von der Schwenkachse (11A, 11B) beabstandetes zweites Verriegelungselement (22A, 22B) und an der inneren Drehtür (7A, 7B) wenigstens ein mit dem zweiten Verriegelungelement (22A, 22B) formschlüssig verbindbares zweites Widerlager (24) aufweist.

8. Kraftfahrzeug (1) nach einem der Ansprüche 1 bis 7, **dadurch gekennzeichnet, dass** die die Türöffnung (6) aufweisende Wand (5) die Rückwand des Passagierraums (4) bildet, dass das Kraftfahrzeug (1) einen seitlich über den Seitenrand der Rückwand nach außen überstehenden Außenrückspiegel aufweist, und dass die Schwenkachse (11A 11B) der Drehtüren (7A, 8A bzw. 7B, 8B) derart vom Seitenrand der Rückwand beabstandet ist und die Abmessungen der Drehtüren (7A, 8A bzw. 7B, 8B) derart an die Lage der Schwenkachse (11A, 11B) und den Überstand des Außenrückspiegels angepasst sind, dass die Drehtüren (7A 8A bzw. 7B, 8B) in ihrer 180° Offenstellung nicht weiter seitlich nach außen über den Seitenrand der Rückwand überstehen als der Außenrückspiegel.

9. Kraftfahrzeug (1) nach einem der Ansprüche 1 bis 8, **dadurch gekennzeichnet, dass** an der Türöffnung (6) zwei innere Drehtüren (7A, 7B) und zwei äußere Drehtüren (8A, 8B) angeordnet sind, dass zwischen einer linken inneren Drehtür (7A) und einer linken äußeren Drehtür (8A) ein linkes Ablagefach (9A) und zwischen einer rechten inneren Drehtür (7B) und einer rechten äußeren Drehtür (8B) ein rechtes Ablagefach (9B) gebildet ist, dass die linke innere Drehtür (7A) und die linke äußere Drehtür (8A) um eine am linken Rand der Türöffnung (6) angeordnete gedachte linke Schwenkachse (11A) und die rechte innere Drehtür (7B) sowie die rechte äußere Drehtür (8B) um eine am rechten Rand der Türöffnung (6) angeordnete gedachte rechte Schwenkachse (11B) verschwenkbar mit der Wand (5) verbunden sind.

## Claims

1. Motor vehicle (1), in particular a rescue vehicle, with a passenger compartment (4) and at least one storage compartment (9A, 9B), which is arranged adjacent thereto, for receiving equipment items of the motor vehicle, wherein the passenger compartment (4) is delimited by at least one wall (5) which has a door opening (6) on which at least one inner revolving door (7A, 7B) is arranged, wherein the storage compartment (9A, 9B) is provided between the inner revolving door (7A, 7B) and an outer revolving door (8A, BB), and wherein the inner revolving door (7A, 7B) and the outer revolving door (8A, 8B) are in each case pivotable relative to the wall (5) and relative to each other between an open and a closed position, **characterized in that** the inner revolving door (7A, 7B) and the outer revolving door (8A, 8B) are connected to the wall (5) so as to be pivotable about the same imaginary pivot axis (11A, 11B).

2. Motor vehicle (1) according to Claim 1, **characterized in that** the inner revolving door (7A, 7B) is configured in the form of a shell and, on the outer side thereof facing away from the passenger compartment (4), has a receiving depression for receiving the equipment items, and/or **in that** the outer revolving door (8A, 8B) is configured in the form of a shell and, on the inner side thereof facing the passenger compartment (4), a receiving depression for receiving the equipment items.

3. Motor vehicle (1) according to Claim 2, **characterized in that** at least one holder (16, 17) for the fastening of the equipment items is arranged in the receiving depression and/or on that side of a revolving door (7A, 7B, 8A, 8B) which faces the latter.

4. Motor vehicle (1) according to Claim 2 or 3, **characterized in that** at least one partition (18) which divides the receiving depression into chambers is arranged in the receiving depression.

5. Motor vehicle (1) according to one of Claims 1 to 4, **characterized in that** the revolving doors (7A, 7B, 8A, 8B) are connected pivotably to the wall (5) in such a manner that, when the outer revolving door (8A, 8B) is in the closed position, the outer side of the outer revolving door (8A, 8B), which outer side faces away from the passenger compartment (4), is aligned in a rectilinear extension with respect to the outer surface of the wall (5).

6. Motor vehicle (1) according to one of Claims 1 to 5, **characterized in that**, for the inner revolving door (7A, 7B), the motor vehicle (1) has a first locking device which can be brought into an open position and a locking position and which has, on the inner revolving door (7A, 7B), a first locking element (19) which is spaced apart from the pivot axis (11A, 11B), and, on the wall (5), the sealing and/or the floor of the passenger compartment (4), has at least one first abutment (20) which is connectable in a form-fitting manner to the first locking element (19).

7. Motor vehicle (1) according to one of Claims 1 to 6, **characterized in that**, for the outer revolving door (8A, 8B), the motor vehicle (1) has a second locking device which can be brought into an open position and a locking position and which, on the outer revolving door (8A, 8B), has a second locking element (22A, 22B) which is spaced apart from the pivot axis (11A, 11B), and, on the inner revolving door (7A, 7B), has at least one second abutment (24) which is connectable in a form-fitting manner to the second locking element (22A, 22B).

8. Motor vehicle (1) according to one of Claims 1 to 7, **characterized in that** the wall (5) having the door opening (6) forms the rear wall of the passenger compartment (4), **in that** the motor vehicle (1) has an exterior rear view mirror projecting laterally outwards over the side edge of the rear wall, and **in that** the pivot axis (11A, 11B) of the revolving doors (7A, 8A and 7B, 8B) is spaced apart from the side edge of the rear wall in such a manner, and the dimensions of the revolving doors (7A, 8A and 7B, 8B) are adapted to the position of the pivot axis (11A, 11B) and to the excess length of the exterior rear view mirror in such a manner, that the revolving doors (7A, 8A and 7B, 8B), in the 180° open position thereof, do not project laterally outwards over the side edge of the rear wall further than the exterior rear view mirror.

9. Motor vehicle (1) according to one of Claims 1 to 8, **characterized in that** two inner revolving doors (7A, 7B) and two outer revolving doors (8A, 8B) are arranged on the door opening (6), **in that** a left storage compartment (9A) is formed between a left inner revolving door (7A) and a left outer revolving door (8A) and a right storage compartment (9B) is formed between a right inner revolving door (7B) and a right outer revolving door (8B), **in that** the left inner revolving door (7A) and the left outer revolving door (8A) are connected to the wall (5) so as to be pivotable about an imaginary left pivot axis (11A) arranged on the left edge of the door opening (6) and the right inner revolving door (7B) and the right outer revolving door (8B) are connected to the wall (5) so as to be pivotable about an imaginary right pivot axis (11B) arranged on the right edge of the door opening (6).

## Revendications

1. Véhicule automobile (1), en particulier véhicule de secours, comprenant un compartiment pour passagers (4) et au moins un compartiment de rangement (9A, 9B), disposé de manière adjacente à celui-ci, pour recevoir des objets d'équipement du véhicule automobile, le compartiment pour passagers (4) étant délimité par au moins une paroi (5) qui comprend une ouverture de porte (6), au niveau de laquelle est disposée au moins une porte pivotante intérieure (7A, 7B), le compartiment de rangement (9A, 9B) étant prévu entre la porte pivotante intérieure (7A, 7B) et une porte pivotante extérieure (8A, 8B), et la porte pivotante intérieure (7A, 7B) et la porte pivotante extérieure (8A, 8B) pouvant être pivotées respectivement par rapport à la paroi (5) et l'une par rapport à l'autre entre une position ouverte et une position fermée, **caractérisé en ce que** la porte pivotante intérieure (7A, 7B) et la porte pivotante extérieure (8A, 8B) sont reliées à la paroi (5) de manière pivotante autour du même axe de pivotement imaginaire (11A, 11B).

2. Véhicule automobile (1) selon la revendication 1, **caractérisé en ce que** la porte pivotante intérieure (7A, 7B) est configurée en forme de coque et comprend, sur son côté extérieur opposé au compartiment pour passagers (4), un renfoncement de réception pour recevoir les objets d'équipement et/ou **en ce que** la porte pivotante extérieure (8A, 8B) est configurée en forme de coque et comprend, sur son côté intérieur tourné vers le compartiment pour passagers (4), un renfoncement de réception pour recevoir les objets d'équipement.

3. Véhicule automobile (1) selon la revendication 2, **caractérisé en ce qu'**au moins un élément de retenue (16, 17) pour la fixation des objets d'équipement est disposé dans le renfoncement de réception et/ou sur le côté, tourné vers celui-ci, d'une porte pivotante (7A, 7B, 8A, 8B).

4. Véhicule automobile (1) selon la revendication 2 ou 3, **caractérisé en ce qu'**au moins une paroi de séparation (18) est disposée dans le renfoncement de réception, laquelle divise le renfoncement de réception en chambres.

5. Véhicule automobile (1) selon l'une quelconque des revendications 1 à 4, **caractérisé en ce que** les portes pivotantes (7A, 7B, 8A, 8B) sont reliées de manière pivotante à la paroi (5) de telle sorte que, lorsque la porte pivotante extérieure (8A, 8B) se trouve dans la position fermée, le côté extérieur, opposé au compartiment pour passagers (4), de la porte pivotante extérieure (8A, 8B) soit aligné en prolongement rectiligne par rapport à la surface extérieure de la paroi (5).

6. Véhicule automobile (1) selon l'une quelconque des revendications 1 à 5, **caractérisé en ce que**, pour la porte pivotante intérieure (7A, 7B), le véhicule automobile (1) comprend un premier dispositif de verrouillage pouvant être amené à une position ouverte et à une position verrouillée, lequel premier dispositif de verrouillage comprend, sur la porte pivotante intérieure (7A, 7B), un premier élément de verrouillage (19) espacé de l'axe de pivotement (11A, 11B) et, sur la paroi (5), le plafond et/ou le plancher du compartiment pour passagers (4), au moins une première butée (20) pouvant être reliée par engagement par complémentarité de formes au premier élément de verrouillage (19).

7. Véhicule automobile (1) selon l'une quelconque des revendications 1 à 6, **caractérisé en ce que**, pour la porte pivotante extérieure (8A, 8B), le véhicule automobile (1) comprend un deuxième dispositif de verrouillage pouvant être amené à une position ouverte et à une position verrouillée, lequel deuxième dispositif de verrouillage comprend, sur la porte pivotante extérieure (8A, 8B), un deuxième élément de verrouillage (22A, 22B) espacé de l'axe de pivotement (11A, 11B) et, sur la porte pivotante intérieure (7A, 7B), au moins une deuxième butée (24) pouvant être reliée par engagement par complémentarité de formes au deuxième élément de verrouillage (22A, 22B).

8. Véhicule automobile (1) selon l'une quelconque des revendications 1 à 7, **caractérisé en ce que** la paroi (5) comprenant l'ouverture de porte (6) forme la paroi arrière du compartiment pour passagers (4), **en ce que** le véhicule automobile (1) comprend un rétroviseur extérieur faisant saillie vers l'extérieur latéralement au-delà du bord latéral de la paroi arrière, et **en ce que** l'axe de pivotement (11A, 11B) des portes pivotantes (7A, 8A ou 7B, 8B) est espacé du bord latéral de la paroi arrière et les dimensions des portes pivotantes (7A, 8A ou 7B, 8B) sont adaptées à la position de l'axe de pivotement (11A, 11B) et à la longueur de saillie du rétroviseur extérieur de telle sorte que, dans leur position ouverte à 180°, les portes pivotantes (7A, 8A ou 7B, 8B) ne fassent pas plus saillie latéralement vers l'extérieur au-delà du bord latéral de la paroi arrière que le rétroviseur extérieur.

9. Véhicule automobile (1) selon l'une quelconque des revendications 1 à 8, **caractérisé en ce que** deux portes pivotantes intérieures (7A, 7B) et deux portes pivotantes extérieures (8A, 8B) sont disposées au niveau de l'ouverture de porte (6), **en ce qu'**un compartiment de rangement gauche (9A) est formé entre une porte pivotante intérieure gauche (7A) et une porte pivotante extérieure gauche (8A) et un compartiment de rangement droit (9B) est formé entre une porte pivotante intérieure droite (7B) et une porte pivotante extérieure droite (8B), **en ce que** la porte pivotante intérieure gauche (7A) et la porte pivotante extérieure gauche (8A) sont reliées à la paroi (5) de manière pivotante autour d'un axe de pivotement imaginaire gauche (11A) disposé sur le bord gauche de l'ouverture de porte (6) et la porte pivotante intérieure droite (7B) ainsi que la porte pivotante extérieure droite (8B) sont reliées à la paroi (5) de manière pivotante autour d'un axe de pivotement imaginaire droit (11B) disposé sur le bord droit de l'ouverture de porte (6).
